Europäisches Patentamt

(19) European Patent Office  (11) Publication number: **0 094 497**

Office européen des brevets  **A1**

(12) **EUROPEAN PATENT APPLICATION**

(21) Application number: **83103015.0**  (51) Int. Cl.³: **G 01 F 1/68**
  **H 01 L 27/16**

(22) Date of filing: **26.03.83**

(30) Priority: **31.03.82 US 364127**

(43) Date of publication of application:
  **23.11.83 Bulletin 83/47**

(84) Designated Contracting States:
  **DE FR GB NL**

(71) Applicant: **HONEYWELL INC.**
  **Honeywell Plaza**
  **Minneapolis Minnesota 55408(US)**

(72) Inventor: **Bohrer, Philip J.**
  **4456 Aldrich Avenue South**
  **Minneapolis Minnesota 55409(US)**

(72) Inventor: **Johnson, Robert G.**
  **12814 March Circle**
  **Minnetonka Minnesota 55343(US)**

(74) Representative: **Rentzsch, Heinz et al,**
  **Honeywell Europe S.A. Holding KG Patent- und**
  **Lizenzabteilung Kaiserleistrasse 55**
  **D-6050 Offenbach am Main(DE)**

(54) Gas flow sensing apparatus.

㊐ A gas flow sensing apparatus comprises a filter (102) provided upstream the sensor (108). The gas flow channel (104) between said filter and a sensing portion (106) of the apparatus changes from a large cross-sectional area at the position of the filter to a small cross-sectional area at the inlet of the sensing portion (106) therewith enhancing the flow velocity of the gas stream downstream of the filter (102). The sensor (108) is exposed to an increased flow velocity and therefore delivers a larger output signal.

FIG. 1

HONEYWELL INC.

Honeywell Plaza

Minneapolis, Minn.,

USA

March 25, 1983

B2009594EP

HR/de

Gas Flow Sensing Apparatus

Prior EP-A 76 935 (application no. 82 108 570.1) describes a highly sensitive air flow sensor. In some applications this type of air flow sensor and similar sensors like hot wire anemometer need a protective filter device to remove particles, lint and the like that could clog the sensing structure. It is the main object of the present invention to improve the operation and stability of gas flow sensors and in particular of low velocity flow sensors. This object is solved by the invention as characterized in claim 1. The invention provides a flow channel having a filter section at its inlet and a sensing section downstream of the filter section whereat the cross-sectional area of the sensing section is smaller than the cross-sectional area of the filter section, so that the flow velocity inside the sensing section is enhanced with respect to the upstream filter section. This leads to a larger output signal of the sensor, so that the signal/ noise ratio is improved and the sensor operation is rendered more stable. Such a structure can be easily applied to low velocity applications as well as to high velocity applications. The filter upstream the sensing section prevents the sensor·from becoming cloged or otherwise impaired by dirt particles comprised in the gas stream.

Improvements of the invention are described in the subclaims and in particular lead to a gas flow sensing apparatus which has multiple applications and is easily to manufacture and to install.

For describing the invention in detail reference is made to the accompanying drawings in which

figure 1     schematically illustrates a preferred
             embodiment of the invention;
figures 2 through 5 and figure 7 illustrate preferred
             embodiments of flow sensors compatible with
             the present invention; and
figure 6     illustrates a circuit for operating the
             flow sensor of figure 4.

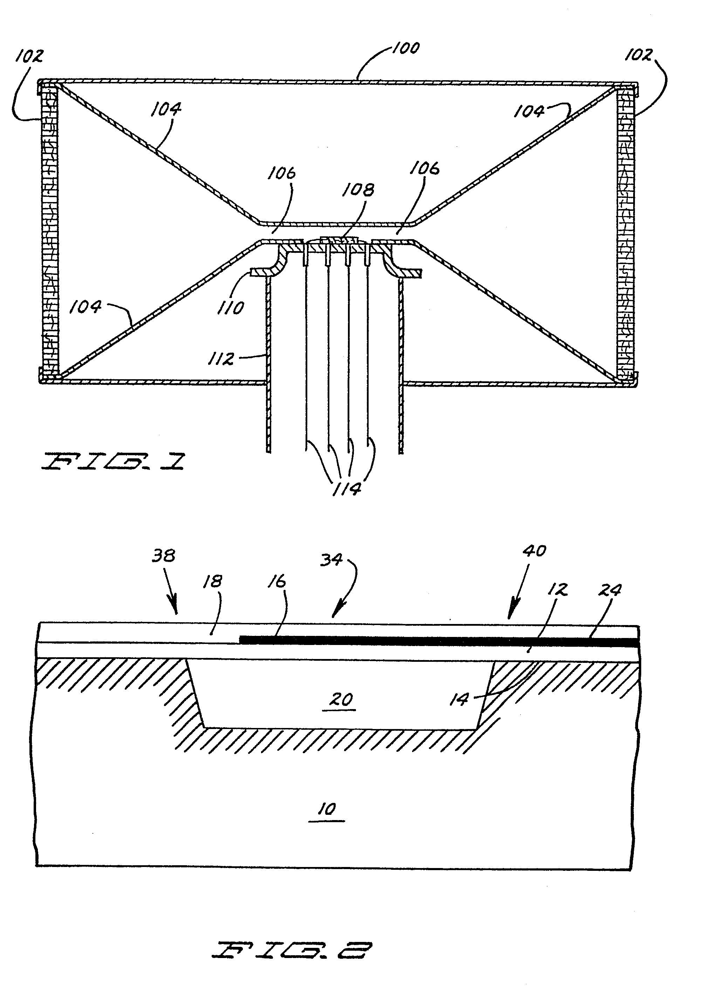

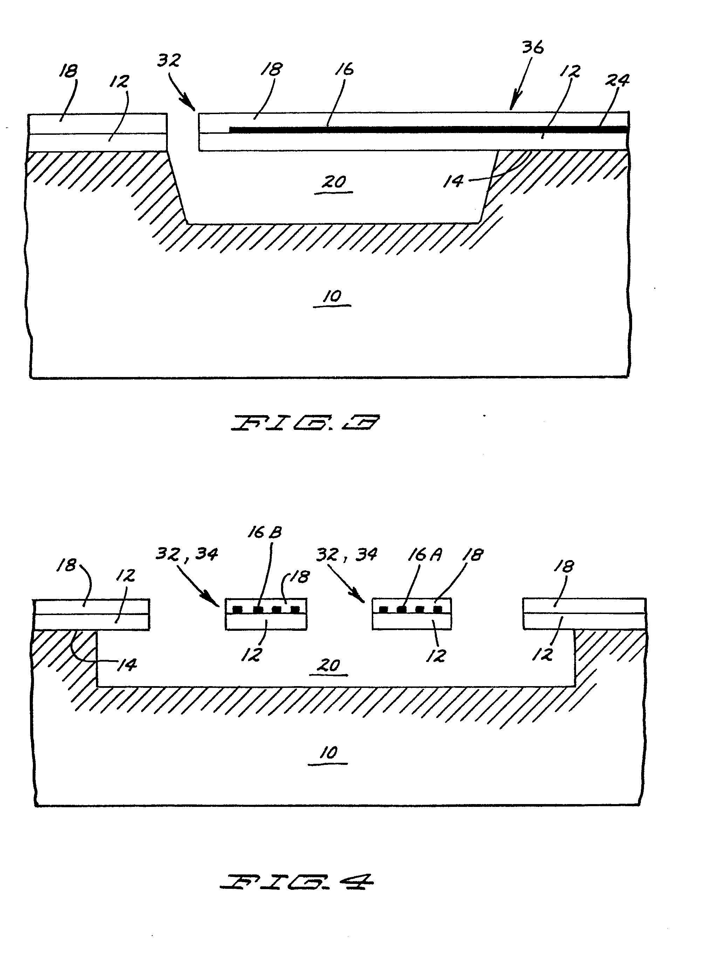

Figures 2 to 6 of the drawings correspond to figures 1 to 5 of the above mentioned prior EP-A and figure 7 corresponds to its figure 11.

0094497

DESCRIPTION OF THE PREFERRED EMBODIMENTS

The present invention provides both a low flow impedance filter and a flow velocity enhancer. The structure shown comprises a tube or housing 100 with low flow impedance filters 102 mounted on each end of housing 100. The housing shown contains one or more tapered flow sections 104 which lead to tubes or housing portions 106 having a substantially smaller cross-sectional area than the portion of housing 100 occupied by filters 102. Housing portions 106 direct air flow onto air flow sensor 108, schematically represented as a chip mounted on a header 110 which is mounted on a fixture 112 through which electrical leads 114 are passed.

The present invention is shown as a bidirectional device having a filter 102 and tapered housing sections 104 on each side of housing portions 106. A device having only a single filter 102 and a single tapered section to receive air flow from a single direction is also within the scope of the present invention. As is noted above, the present invention is shown having sections 104 which taper smoothly from the cross-sectional areas of filter 102 to housing portions 106. Such a smooth taper is not required; virtually any configuration of the volume between filters 102 and housing portions 106 will work. For example, flow sections 104 could be configured as right circular cylinders having a filter at one end and a small diameter opening corresponding to portions 106 at the other end.

The air flow cross-sectional area of filters 102 is very large compared to the air flow cross-sectional area of portions 106. The filter flow impedance can therefore be chosen to be very low compared to the flow impedance of portions 106. Therefore, there is little pressure drop in sections 104, and nearly all the pressure drop will occur in portions 106 which should be made as short as possible to provide as large a pressure gradient

- 4 -

0094497

as possible and, consequently, as large a flow velocity as possible across sensor 108.

With large area, low impedance filters 102, a large amount of lint or dirt can accumulate on filters 102 without significantly changing the pressure drop across orifice tubes 106. For example, a filter-to-orifice area ratio of 1000 to 1 is reasonable, and, in that case, if clogging increases the filter impedance by 10 times, only a 1 percent reduction in flow rate through portions 106 occurs. If clogging increases filter impedance by 100 times, only a 9 percent reduction occurs.

The relatively small cross-sectional area of housing portions 106 provides advantages. The small area keeps volume flow rate through filters 102 low, thus minimizing filter clogging. Further, the major flow projectory is around the filter and housing instead of through it so that small particles flow around the filter and housing rather than into the filter.

If the application of the present invention is detection or measurement of flow between two different rooms having very low pressure differences, the present invention may be placed in a wall port and sealed in place so that all the pressure differential between rooms occurs across portions 106, thus maximizing air flow detection sensitivity. In a free flowing air stream, the inertial pressure of air impacting the upstream filter and the aspirating effect of the air flowing past the downstream filter provides the additional pressure gradient across portions 106 to increase the flow velocity through portions 106. Thus, the same filter structure shown may be used in a wide range of flow velocity applications, and this standardization reduces unit cost significantly.

Because particles entrapped by filters 102 tend to end up caught on previously trapped particles, later particles do not proportionately increase the flow impedance. Thus, to increase the flow impedance relative to an initial value from 5 time to 10 times would require a far greater quantity of dust and lint than would be required to achieve the first 5 times increase. Consequently, for a quite high initial ratio of orifice 106 impedance to filter 102 impedance, as described above, the useful life of filters 102 with respect to clogging are extremely long. This relationship between the increase of flow impedance and the quantity of dirt in the filter depends on area ratio, the actual screen or filter used, and the type of dirt.

Conventional hot wire anemometers, as well as the flow sensor described below and in the above cross-referenced copending patent application, are constantly exposed in the flow and would inevitably catch lint and dirt. Such flow sensors are also subject to possible mechanical breakage caused by lack of protection when handling and emplacing. When coupled with the present invention, the sensing element of the flow sensor may be in a plane of housing portion 106 such that laminar air flow is obtained parallel to the surface; in addition, the air across the sensing element is filtered. Further, the sensing element is entirely contained within a protective structure. Lastly, the structure provides for maximizing the pressure drop, and consequently, the flow rate over the flow sensor.

Thus, through the present invention, a flow sensor is protected from mechanical breakage and is protected from lint and dirt. In addition, filter clogging effects on air flow velocity across portions 106 are largely removed. Further, air flow velocity through portions 106 is greatly enhanced relative to the flow velocity through filter 102. In addition, the present invention can be of standardized design for a wide range of applications. The expected filter life without excessive clogging can be very great,

0094497

and easy replacement of the filter renews the life of the device. Further, air flow velocity enhancement is achieved as a consequence of the solution to the long life filter requirement without requiring an additional major structure for the air flow velocity enhancement.

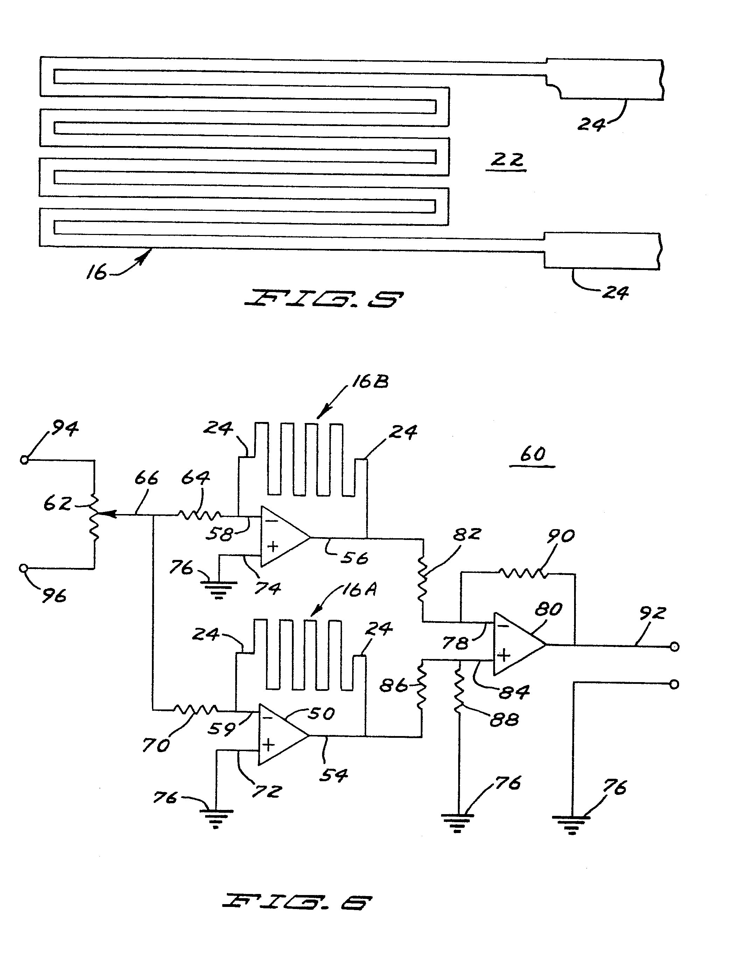

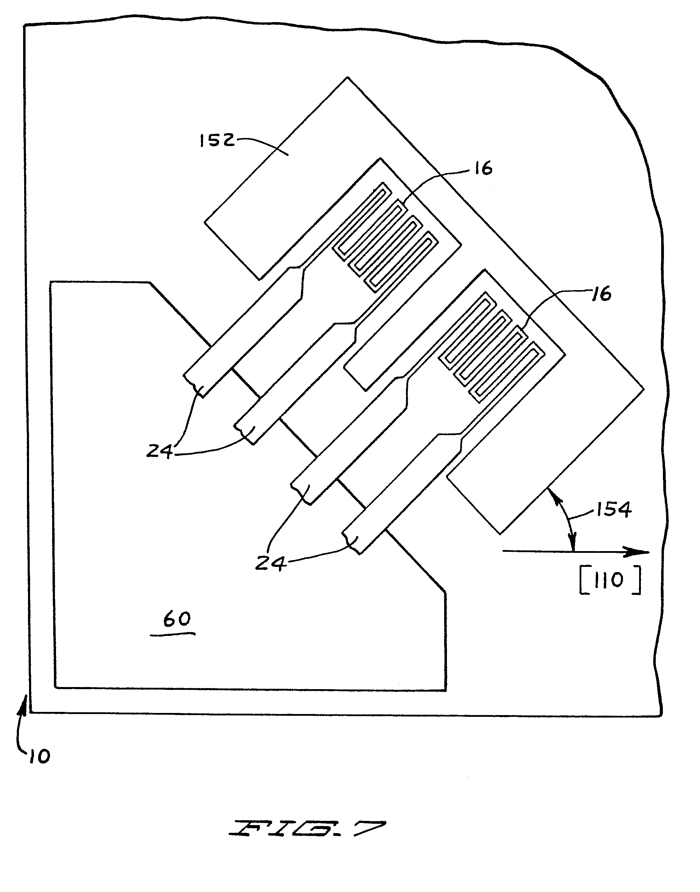

Preferred embodiments of flow sensors compatible with the present invention are illustrated in Figures 2 through 5 and in Figure 7. Figure 6 illustrates a circuit compatible with the flow sensor illustrated in Figure 4.

Figures 2 and 3 are cross-sectional side views of alternate preferred embodiments of the present flow sensor. A monocrystalline semiconductor body 10 has a first surface 14 covered with a dielectric layer 12 such as silicon nitride. In the embodiments shown, an element 22 (Figure 5) comprises a permalloy resistive element or grid 16 and leads 24 sputtered onto dielectric layer 12, element 22 being covered with a layer 18 of dielectric such as silicon nitride.

Dielectric layer 12 provides electrical isolation between element 22 and semiconductor 10 (layers 12 and 18 also provide passivation for element 22). Substantial thermal and physical isolation is provided between resistive element 16 and semiconductor body 10 by forming a depression 20 below element 16. Depression 20 is typically formed using preferential etching techniques such as those discussed elsewhere herein. Without depression 20, it would be difficult to achieve substantial thermal and physical isolation between sensing element 16 and semiconductor 10. For example, if resistive element 16 were separated from semiconductor 10 by only a solid dielectric layer, resistive element 16 would be substantially heat sunk into semiconductor 10, since the thermal conductivity of solid dielectrics are typically greater than the thermal conductivity of air.

Substantial thermal and physical isolation between sensing element 16 and semiconductor 10 provides many advantages. For example, by providing a very thin sensing means that is substantially thermally isolated from the semiconductor body, the sensing means is adapted to provide a very sensitive measurement of air flow since the temperature of the thin structure will be readily affected by the air flow. This is in contrast to solid state thermal anemometers that have sensing elements substantially heat sunk into the semiconductor body. The temperature sensitivity of such structures is greatly affected by the thermal mass of the semiconductor itself.

In the embodiment of Figure 2, member or sensing means 34 is bridged across depression 20, member means 34 having first and second ends 38 and 40 connected to semiconductor first surface 14. As disclosed, member means 34 is substantially rectangular in shape when viewed from above, member means 34 as disclosed comprising resistive element 16 and a portion of dielectric layers 12 and 18.

In the embodiment of Figure 3, member or sensing means 32 comprising a resistive element 16 and a portion of dielectric layers 12 and 18 is cantilevered over depression 20, only one end 36 of member means 32 being connected to semiconductor first surface 14. Having only one end of member means 32 connected to semiconductor body 10 provides certain advantages, including the advantage of permitting member means 32 to expand and contract in substantially all directions without substantial restraint from semiconductor body 10. In addition, member means 32 provides an embodiment having substantially increased thermal isolation because heat loss by conduction through member means 32 occurs only through one supporting end. As with member means 34, member means 32 is typically substantially rectangular in shape when viewed from above (for example, see Figure 7).

Figure 4 illustrates an end cross-sectional view of a preferred embodiment comprising two member means 32 or 34. With regard to the present flow sensor, a pair of member means is a preferred embodiment having certain advantages. For example, as is further discussed below, using two substantially identical member means and offsetting a signal from one against a signal from the other can provide automatic temperature compensation for changing environmental temperatures. In addition, such an arrangement can greatly increase measurement accuracy, since background voltage within a single sensor can easily be substantially eliminated. Further, using two measurement elements in a flow sensor provides an indication of flow direction as well as rate: for example, in a constant current mode of operation of the present sensor, the upstream element cools more than the downstream element, as is further explained below.

However, a single sensing means supported over depression 20 is consistent with the present flow sensor; for example, for making a flow/no-flow measurement, an air turbulence signal generated in a single-sensing-element flow sensor would be adequate to establish the presence or the absence of air flow. Amplification of only the a.c. (turbulent flow) component of an element resistance change eliminates detection of slow or d.c. changes in element resistance caused, for example, by changing environmental temperature.

For the preferred embodiments shown, permalloy was selected to form resistive element 16 because permalloy can be precisely deposited by sputtering a layer only hundreds of angstroms thick, and because the characteristics of permalloy provide a highly sensitive predetermined relationship between the resistance of grid or element 16 and the temperature of the element. For example, a very thin member or sensing means 32 or 34 may be formed of resistive element 16 and dielectric layers 12 and 18. As such, air flowing over member means 32 or 34 will cause resistive element 16 to cool in predetermined relation to the rate of air flow, thus causing a change in resistance and providing a measurement of the air flow.

For the embodiments shown, member means 32 and 34 are typically on the order of 0.8 - 1.2 microns thick, this thickness including element 16 (typically on the order of 800 angstroms thick) and dielectric layers 12 and 18, each typically on the order of thousands of angstroms thick. This very thin and highly sensitive configuration, in combination with the fact that sensing element 16 is substantially isolated from the body of semiconductor 10 by depression 20 (typically in the range of 0.001 to 0.010 inch deep) causes sensing or member means 32 and 34 to be highly sensitive to flow measurements.

As previously indicated, a preferred embodiment of element 16 comprises a permalloy grid as shown in Figure 5. Leads 24 may be permalloy since additional processing steps are then avoided (making leads 24 of another material would require additional processing steps; although leads 24 of permalloy become slightly heated, they are relatively wide, as illustrated in Figure 5, and they are substantially heat sunk into semiconductor body 10, making heating of leads 24 relatively minor).

As previously indicated, advantages exist in providing a flow transducer comprising first and second resistive elements such as illustrated in Figure 4. Such an embodiment may be coupled with a circuit such as illustrated in Figure 6, thus providing a flow transducer which is independent of environmental temperatures and which provides further sensitivity by eliminating background signals and directly providing a measurement signal.

For the purpose of discussing the operation of the sensor embodiment illustrated in Figure 4 and for the purpose of describing the circuit illustrated in Figure 6, the sensing elements in these figures have been labeled 16A and 16B. Each element 16A and 16B comprising an element 16. Element 16A and 16B are typically matched (at least substantially identical) but they do not have to be matched.

Circuit 60 illustrated in Figure 6 comprises three differential amplifiers, each of which may comprise, for example, a TLC87. As illustrated, each of two amplifiers 50 and 52 have a resistive element 16A or 16B connected across its feedback loop. Thus, resistive element 16A is connected between an output 54 of a negative input 59 of amplifier 50, the connections being made via leads 24 associated with element 16A. Resistive element 16B is connected across an output 56 and a negative input 58 of amplifier 52, the connections again being made with leads 24 associated with element 16B.

Negative input 58 to amplifier 52 is connected to a wiper 66 of a potentiometer 62 through a resistor 64. Negative input 59 to amplifier 50 is connected to wiper 66 through a resistor 70. Positive inputs 72 and 74 of amplifiers 50 and 52, respectively, are connected to ground or reference potential 76.

Output 56 of amplifier 52 is connected to a negative input 58 of amplifier 80 through a resistor 82, output 54 of amplifier 50 being connected to a positive input 84 to amplifier 80 through a resistor 86. Positive input 84 of amplifier 80 is also connected to ground or reference potential 76 through a resistor 88. A resistor 90 is connected between an output 92 of amplifier 80 and a negative input 78 of the amplifier.

A first terminal 94 of potentiometer 62 is provided for connection to a positive power supply such as +15VDC, a second terminal 96 of potentiometer 62 being provided for connection to a negative power supply such as -15VDC. Potentiometer 62 provides a means for selecting a predetermined voltage anywhere between the plus and minus voltage of the power supply.

In operation, the disclosed circuit generates a voltage between output 92 and ground or reference potential 76 that bears a predetermined relationship to gas flow rate over the two member means 32 or 34 comprising resistive elements 16A and 16B.

Resistive elements 16A and 16B are configured into the feedback loops of amplifiers 50 and 52, respectively. Each operational amplifier 50 and 52 maintains constant current through its feedback loop. Therefore, the electrical current flowing through each resistive element 16A and 16B is independent of the element resistance. In order to maintain constant current in its feedback loop, each operational amplifier in effect changes its output voltage in proportion to the change in resistance of resistive element 16A or 16B.

As previously indicated, in a constant current mode of operation, as with the circuit illustrated in Figure 6, the resistance of each permalloy element 16A or 16B changes in a predetermined manner with the temperature of the resistive element. Therefore, the voltage output of each operational amplifier 50 and 52 bears a predetermined relationship to the associated resistive element temperature. (As discussed further below, modes of operation other than constant current are also possible).

Operational amplifier 80 amplifies the difference between the voltage outputs of operational amplifiers 50 and 52, the voltage at output 92 being proportional to the difference in voltage between the output voltages of operational amplifiers 50 and 52. Accordingly, the voltage at output 92 bears a predetermined relationship to the temperature difference between resistive elements 16A and 16B. The temperature difference between resistive elements 16A and 16B bears a predetermined relationship to the gas flow rate over the elements. Therefore, the voltage at output 92 of amplifier 80 bears a predetermined relationship to the rate of flow across elements 16A and 16B.

With the circuit disclosed in Figure 6, gas flowing first over one member or sensing means comprising resistive element 16A and then over a second member or sensing means comprising an element 16B causes resistive element 16A to cool more than resistive element 16B, since the gas flowing over element 16A picks up heat from element 16A and carries heat to the vicinity of element 16B. Assuming that the circuit supply voltage at wiper 66 is positive, this causes the output voltage of amplifier 52 to be greater than the output voltage of amplifier 50. This difference is magnified by amplifier 80, the output voltage at output 92 bearing a predetermined relationship to the rate of gas flow. As previously indicated, the output voltage at output 92 can also provide an indication of directionality. For example, if element 16A and 16B are aligned along the flow in a duct or in housing portions 106 of the present invention, the present two element sensor can be used to determine direction of flow as well as flow rate, since the upstream element will cool more than the downstream element, as explained above.

As indicated, the circuit illustrated in Figure 6 operates sensing elements 16A and 16B in a constant current mode. Other circuits are also possible, including circuits which operate the sensing element or elements of the present flow sensor in a constant voltage mode, a constant temperature (constant resistance) mode, or a constant power mode. Circuits such as 60 illustrated in Figure 6 may be integrated directly onto semiconductor body 10 as schematically illustrated in Figure 7.

The present flow sensor can be fabricated through batch processing as further described below.

A preferred implementation of fabricating the present sensor comprises providing a (100) silicon wafer surface 14 which receives a layer of silicon nitride 12 typically 3000 angstroms thick that is deposited by standard sputtering techniques in a low pressure gas discharge. Next, a uniform layer of permalloy, typically 80 percent nickel or and 20 percent iron and 800 angstroms thick, is deposited on the silicon nitride by sputtering.

Using a suitable photo mask, a photo resist, and a suitable etchant, the permalloy element 22 comprising grid 16 and leads 24 are delineated.

A second layer 18 of silicon nitride, typically 5000 angstroms thick, is then sputtered-deposited to provide complete step coverage of the permalloy configuration and thus protect the resistive element and its connections from oxidization. (Although making the first layer of silicon nitride 3000 angstroms thick and the second layer of silicon nitride 5000 angstroms thick results in a member means having non-symmetrical layers of dielectric, such lack of symmetry may be corrected by making the layers of equal thickness.) One or more openings 152 (Figure 7) are then etched through the nitride to the (100) silicon surface in order to delineate each member means. (Although the member means 32 or 34 typically have straight edges, such configurations could be varied by, for example, having curved edges.)

Finally, anisotropic etchant that does not attack the silicon nitride is used to etch out the silicon in a controlled manner from beneath the member means 32 or 34 (KCH plus isopropyl alcohol is a suitable etchant). The sloping sides of the etched depression are bounded by (111) and other crystal surfaces that are resistive to the etchant, and the bottom of the depression, a (100) surface which is much less resistant to the etchant, is located a specified distance, e.g., 0.004 inch, from the member means, typically by adjusting the duration of the etch. A doped silicon etch stop, e.g., a boron-doped layer, may also be used to control the depth of the depression, although such stops are typically not necessary when using the present process.

In order to obtain undercutting of the member means in a minimum amount of time, the predetermined configuration of the member means, e.g., typically straight edge or an axis of the member means, is oriented at a non-zero angle 154 (Figure 7) to the [110] axis of the silicon. By making such an angle substantially 45 degrees, the member means will be undercut in a minimum amount of time. For example, using the 45 degree angle, a cantilever beam of the typical dimensions disclosed elsewhere herein can be undercut in about 90 minutes by comparison to an etched time of several hours using a zero degree orientation.

Etch holes 152 running along the side of member means 32 or 34 have typical widths on the order of 0.002 inch to 0.005 inch. Typical dimensions of widths on the order of 0.002 inch to 0.005 inch. Typical dimensions of member means such as 32 or 34 are 0.005 inch - 0.007 inch wide, 0.010 - 0.020 inch long, and 0.8 - 1.2 microns thick. Typical permalloy elements such as element 16 illustrated in Figure 5 have a thickness of approximately 800 angstroms (typically in the range of approximately 800 angstroms to approximately 1600 angstroms) with a preferred composition of 80 percent nickel and 20 percent iron and a resistance value of about 1000 ohms at room temperature. Resistance values for varying applications would typically be within the range of approximately 500 ohms to approximately 2000 ohms at room temperature, e.g., approximately 25°C (at permalloy element temperatures up to approximately 400°C, resistance values increased by a factor of up to approximately 3.0). Line widths within permalloy grid 16 may be approximately 6 microns having a 4 micron spacing.

Depressions such as 20 typically have a 0.004 inch spacing between member means 32 or 34 and semiconductor body 10, but such spacing could easily vary in the range of approximately 0.001 inch to approximately 0.010 inch. A typical thickness of semiconductor body or substrate 10 is 0.008 inch. (The dimensions provided are illustrative only and are not to be taken as limitations).

Member means of the typical dimensions indicated have a very small thermal heat capacity and thermal impedance that yield a thermal time constant of about 0.005 seconds. Consequently, a small change in heat input can rapidly result in a new thermal balance at an appreciably different temperature of the sensing element. This difference can yield a substantial electrical output signal.

The strength-to-weight ratio for a flow sensor as described is very favorable, and a two-ended bridge of the above typical dimensions can withstand mechanical shock forces well in excess of 10,000 gravities. Even a single-ended structure of these dimensions when treated as a cantilever beam can be shown to withstand 10,000 gravities of shock.

It is a distinct advantage in many applications to heat member means 32 or 34 well above room or ambient temperature to optimize its sensing performance. Typical operating temperatures are in the range of approximately 100 to 400°C. Using the preferred permalloy element, this can be accomplished with only a few milliwatts of input power. Such power levels are compatible with integrated electronics which can be fabricated on semiconductor body 10 with the sensor if desired.

The present invention is to be limited only in accordance with the scope of the appended claims, since others skilled in the art may devise other embodiments still within the limits of the claims. For example, as previously indicated, a device having only a single filter 102 for receiving flow from one direction only (as opposed to the bidirectional device shown in Figure 1) is within the scope of the present invention. Further, as has also been previously noted, housing portions 104 need not be a smooth taper; virtually any configuration of the volume between filters 102 and housing portions 106 will work. For example, portions 104 could be right circular cylinders having a filter 102 enclosing one end and being enclosed at the other end except for a small hole corresponding in area to the cross-sectional area of orifice 106.

Claims:

1. Gas flow sensing apparatus, c h a r a c t e r i z e d
   i n  t h a t  filter means (102) are provided upstream
   the location of the flow sensor (108) and the cross-
   sectional area of the flow channel (104,106) changes
   such that the flow velocity is enhanced between the
   filter means (102) and the location of the flow sensor
   (108).

2. Apparatus according to claim 1, c h a r a c t e r -
   i z e d  i n  t h a t  the sensor (108) is located
   in the flow channel in a sensing portion (106) of
   constant cross-sectional area and that the cross-
   sectional area of the channel (104) between the filter
   (102) and the inlet of said sensing portion changes
   smoothly from a large cross-sectional area at the
   position of the filter (102) to a small cross-sectional
   area at the area at the inlet of said sensing portion
   (106)

3. Apparatus according to claim 2, c h a r a c t e r -
   i z e d  i n  t h a t  the channel (104,106) is
   of circular cross-section and the transition portion
   (104) of the channel tapers from said filter (102) to
   the inlet of said sensing portion (106).

4. Apparatus according to one of claims 1 to 3, c h a r -
   a c t e r i z e d  i n  t h a t  the ratio of the
   cross-sectional areas at the position of the filter (102)
   and in the sensing portion (106) is greater than 100:1.

5. Apparatus according to claim 4, c h a r a c t e r -
   i z e d  i n  t h a t  the ratio is greater than
   1000:1.

6. Apparatus according to one of the preceding claims, c h a r a c t e r i z e d    i n    t h a t  filter means (102) are provided at both ends of the flow channel with the sensing portion (106) being located between them, whereat the cross-sectional area of the flow channel increases at both sides of the sensing portion (106) to a larger cross-sectional area at the position of the filter means (102).

7. Apparatus according to claim 6, c h a r a c t e r - i z e d    i n    t h a t   the filter means (102) at both ends of the flow channel (104,106) have the same cross-sectional areas.

8. Apparatus according to one of the preceding claims, c h a r a c t e r i z e d    b y   a flow sensor comprising:
a semiconductor body (10) having a depression (20) formed into a first surface (14) of the body; member means (32,34) comprising resistive element means (16) the member means (32,34) having a predetermined configuration suspended over the depression (20), the member means (32,34) being connected to the first surface (14) at least at one location, the depression (20) opening to the first surface (14) around at least a portion of the predetermined configuration, the depression (20) providing substantial physical and thermal isolation between the resistive element means (16) and the semiconductor body (10); the resistive element means (16) when provided with current becoming heated, there being a predetermined relationship between the resistance and the temperature of the resistive element means (16), the resistive element means (16) being adapted to provide a signal related to the rate of air flowing over the member means (32,34).

*FIG.1*

*FIG.2*

FIG.3

FIG.4

FIG.5

FIG.6

FIG.7

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 433 069 (J.H. TRAGESER) * Claim 1; column 3, line 44 - column 4, line 2; figures 1, 2, 7 * | 1-3,6 | G 01 F 1/68<br>H 01 L 27/16 |
| A | US-A-3 962 917 (H. TERADA) * Claim 1; figure 1 * | 1,6,7 | |
| A | US-A-3 881 181 (H. KHAJEZADEH) * Column 1; lines 2-8; claim 1, figures 1, 2 * | 8 | |

TECHNICAL FIELDS
SEARCHED (Int. Cl ³)

B 01 D 46/00
G 01 F 1/00
H 01 L 27/00

The present search report has been drawn up for all claims

| Place of search | Date of completion of the search | Examiner |
|---|---|---|
| BERLIN | 29-08-1983 | BERTRAM H E H |